# EUROPEAN PATENT APPLICATION

(11) **EP 1 065 111 A1**
(43) Date of publication of application: **03.01.2001**
(21) Application number: 00112881.8
(22) Date of filing: 19.06.2000
(51) Int. Cl.: B60R 22/26

(54) **Collapsible loop for the safety seat belt of the rear central seat of a vehicle**

(30) Priority: 01.07.1999 IT TO990125 U
(71) Applicant: FIAT AUTO S.p.A., 10135 Torino (IT)
(72) Inventor: Mazzucco, Gino, 10095 Grugliasco (IT); Rovero, Giuseppe, 10134 Torino (IT)
(74) Representative: Di Francesco, Gianni

(57) **Abstract**

A loop for the safety seat belt of the rear central seat of a motor vehicle, connected, by means of an axis of rotation (7), to the upper edge of the seat back (1) of the rear seat, in such a way that the seat back is collapsible.

## Description

The present invention refers to a loop for the safety seat belt of the, rear central seat of a motor vehicle for passengers. It is known that recent regulations on safety for passengers require the central rear seat also to be provided with the safety three points belt. It is necessary to provide for the central rear seat a means to fasten the end of the belt presenting the engagement plate, so that the passenger can easily reach it and fasten the seat belt. Passengers sitting on the side seats of the rear seat can find the end of the belt at the side of the vehicle in special loops which are fixed on it, while the passenger sitting in the central seat would find it difficult to reach a belt fixed on the side, not to mention the fact that a belt of this kind would not be adapted to secure the passenger's body correctly. Loops for the safety seat belt are known which are anchored at the upper edge of the seat back of the rear seat, so that the central seat is provided with the safety seat belt. However, said loops present the problem that they make it more difficult to collapse the seat back since they protrude and interfere with the seat back of the respective front seat so that it is necessary to collapse the seat back of the front seat in order to bring the rear one in its closed position.

It is an object of the present invention to avoid the above mentioned drawbacks. This object is achieved by means of the present invention intended to provide a loop for the safety seat belt of the central rear seat of a motor vehicle for passengers, the characteristics of which are set forth in claim 1.

Further advantages and characteristics will become more clear from the following description which refers to the appended drawings provided as non-restrictive example, and in which:
- figure 1 is a view of the seat back of the rear seat of a motor vehicle provided with the loop according to the invention;

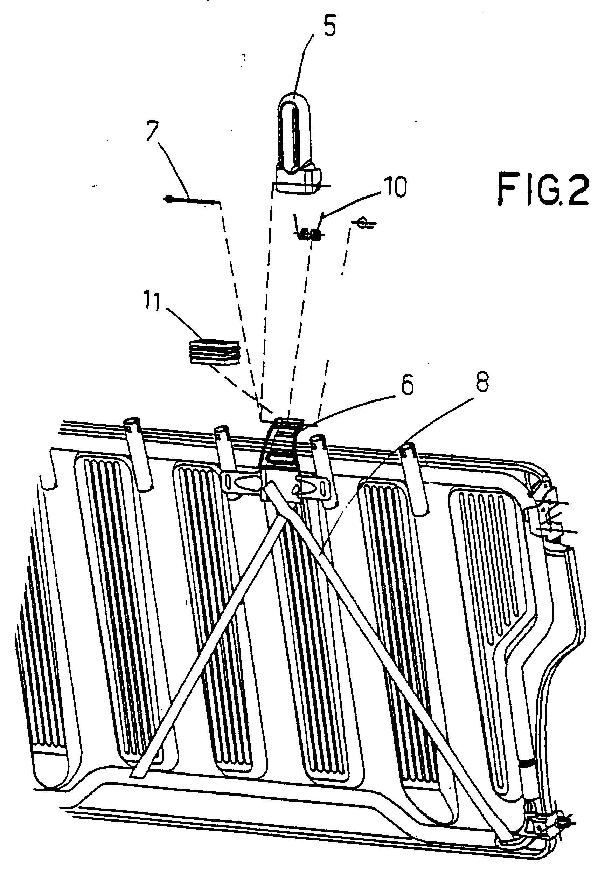

- figure 2 is a view of the frame of the seat back in figure 1 with the components of the loop, shown in exploded view.

With reference to the figures, reference number 1 indicates the single seat back of the rear seat of a motor vehicle provided with headrest 3. The seat back is hinged at 4 in order to be collapsed when larger loading space is needed. A loop 5 for the safety seat belt of the central seat is fixed on the upper edge of the seat back, between the headrest of the central seat and the headrest of the right side seat. The loop is made of plastic material and presents a vertical slot the width of which allows both the plate, located at the engagement end of the belt, and the belt, to pass with slight interference.

The loop 5 is mounted on a support 6 by means of an axis of rotation 7, in such a way that it is collapsible. The support 6 is fixed to the frame of the seat back 1 by means of soldering and is provided with two reinforcement strap 8. A spring 10 keeps the support in vertical position allowing the support to rotate around the axis 7. A shielding and finishing element 11 is fit on the final part of the support 6 in order to prevent the passenger to come into contact with it.

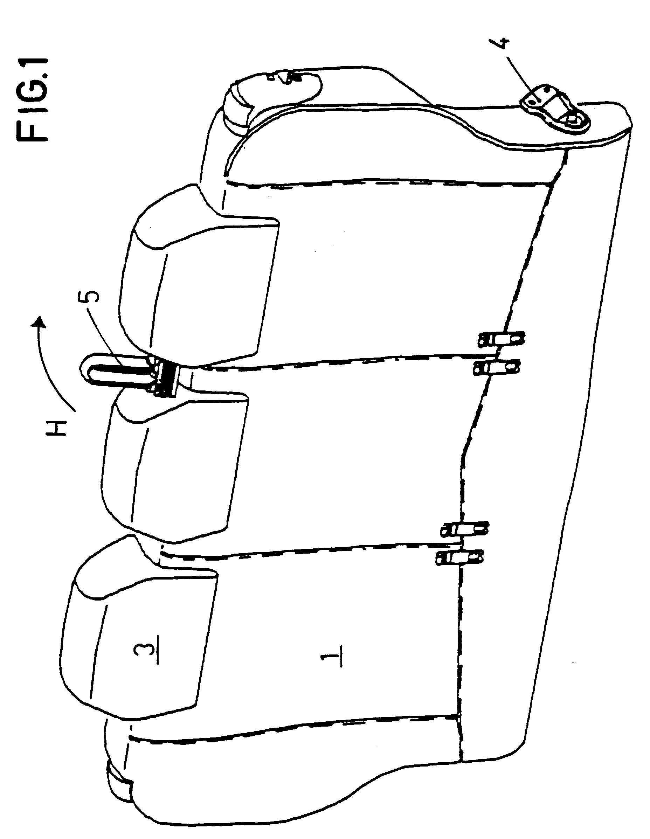

The loop that is mounted in this way can be collapsed towards the rear part of the seat back (arrow H in fig. 1) thus avoiding being an obstacle while the seat back is collapsed. When the seat back is put again in the upright position, the spring (10) pushes the loop which returns automatically to its vertical position.

## Claims

1. Loop for the safety seat belt of the rear central seat of a motor vehicle, connected to the upper edge of the seat back (1) of the rear seat by means of a support integral with the frame of said seat back, characterised in that the connection between the loop (5) and the support (6) is achieved by means of an axis of rotation (7) so that the loop can be collapsed.

2. Loop for the safety seat belt as claimed in claim 1, characterised in that it is kept in its vertical position by means of a spring (10).
